# EUROPEAN PATENT APPLICATION

(11) **EP 1 197 519 A1**
(43) Date of publication of application: **17.04.2002**
(21) Application number: 99959778.4
(22) Date of filing: 13.12.1999
(51) Int. Cl.: C08L 23/00, C08K 3/00, C08K 9/04, B29C 47/00, C08J 5/00, C08J 5/14, B60J 10/00

(54) **POLYOLEFIN RESIN COMPOSITION, PROCESS FOR PRODUCING POLYOLEFIN RESIN MOLDING MATERIAL, MOLDED POLYOLEFIN RESIN, AND WEATHERSTRIP AND PROCESS FOR PRODUCING THE SAME**

(30) Priority: 15.12.1998 JP 35622098; 10.02.1999 JP 3290599; 16.03.1999 JP 7050499; 28.06.1999 JP 18178199; 28.06.1999 JP 18178299; 28.07.1999 JP 21375999; 28.07.1999 JP 21376099; 28.07.1999 JP 21376199
(71) Applicant: SEKISUI CHEMICAL CO., LTD., Osaka-shi, Osaka 530-8565 (JP); Tokuyama Sekisui Co., Ltd., Shinnanyo-shi, Yamaguchi 746-0006 (JP)
(72) Inventor: ISHII, Masahiro, Toyonaka-shi, Osaka 560-0884 (JP); HIGASHIKAWA, Kiyoshi, Shinnanyo-shi, Yamaguchi 746-0044 (JP); OMURA, Hirofumi, Otsu-shi, Shiga 520-0047 (JP)
(74) Representative: TER MEER STEINMEISTER & PARTNER GbR
(86) International application number: JP9906977
(87) International publication number: WO0036008

(57) **Abstract**

An object is to obtain a polyolefinic resin composition which can be readily melt processed to provide products that exhibit a good balance of rigidity and impact resistance.

A polyolefinic resin composition comprising a mixture of a polyolefinic resin and an inorganic-based filler having a mean particle diameter up to 10 µm. The inorganic fiiler is incorporated in the mixture in the amount by weight of 0.5 - 85 %.

## Description

### TECHNICAL FIELD

The present invention relates to a polyolefinic resin composition for use in the formation of polyolefinic resin products, a polyolefinic resin compound and a polyolefinic resin product. More particularly, the present invention relates to a polyolefinic resin composition which enables formation of products having improved rigidity, impact resistance and heat resistance, a method for preparation of a polyolefinic resin compound, and a polyolefinic product. The present invention also relates to an automotive weatherstrip and a method for fabricating the same.

### DESCRIPTION OF PRIOR ART

Various polyolefinic resin compositions have been proposed for formation into profiles or products for automotive use. For example, Japanese Patent Laying-Open Nos. Hei 5-78680 and Hei 4-368223 and Japanese Utility Model Laying-Open No. Hei 5-28720 propose the use of polyolefinic resins such as polypropylene, filler-loaded polypropylene, glass-fiber reinforced polypropylene and high crystalline polypropylene for formation of the weatherstrip which is an automotive window frame member.

However, no detail is provided in these references as to the nature of olefinic resins, i.e., polypropylenes, and to the specification (particularly, particle sizes and surface treatment) of fillers or glass fibers incorporated, nor do they take into account how the incorporation of those fillers or glass fibers affects melt flow rates of resulting mixtures. Accordingly, such resin compounds when extruded often show sagging (drawdown) at the die exit, which practically prevents desired shaping. Even if extruded successfully, the resulting products exhibit a poor balance of physical properties, e.g., exhibit insufficient rigidity or high rigidity but low impact resistance.

In the case where the resulting product is insufficient in rigidity and heat resistance, its use for a weatherstrip as a part of an automotive window frame sometimes results in the occasion to come off immediately after its attachment to an automotive door. Such a weatherstrip, when exposed to high temperature atmosphere, decreases in rigidity and is also caused to come off occasionally. Where the product is high in rigidity but low in impact resistance, machining thereof, such as drilling to make a hole in the weatherstrip for mounting to the automotive door, often causes cracks in the weatherstrip.

The weatherstrips made from polyolefinic resins are generally insufficient in surface scuff resistance and thus susceptible to scuff, during car washing or door handling, which causes a problem of poor appearance.

For example, Japanese Patent Laying-Open No. Hei 6-218788 discloses a method for improving the scuff resistance of a weatherstrip by providing a polypropylene or other ethylenic resin coat on its surface. However, this method is still insufficient to result in the desired improvement in scuff resistance of the weatherstrip.

### SUMMARY OF THE INVENTION

It is an object of the present invention to provide an polyolefinic resin composition which can solve the problems encountered in the above-described prior techniques, which exhibits a satisfactory extrudability and which can result in a product that has a good balance of rigidity and impact resistance, and also a method for preparation of an polyolefinic resin compound.

It is another object of the present invention to provide an polyolefinic resin composition which exhibits a satisfactory extrudability and which can result in a product that has a good balance of rigidity, heat resistance and impact resistance, and also a method for preparation of an polyolefinic resin compound.

It is a further object of the present invention to provide an polyolefinic resin product which is readily obtainable via extrusion, which exhibits a good balance of rigidity and impact resistance and further a good balance of rigidity, heat resistance and impact resistance, and which exhibits a good scuff resistance.

It is a further object of the present invention to provide a weatherstrip or a slide guide for an automotive side window glass which exhibits a good balance of rigidity and impact resistance and also a good scuff resistance, and also to provide a method for fabrication thereof.

In accordance with a broad aspect of the present invention, a polyolefinic resin composition is provided which primarily comprises a mixture of a polyolefinic resin and an inorganic filler having a mean particle diameter up to 10 µm. Characteristically, the inorganic-based filler is incorporated in the resin composition in the amount of 0.5 - 85 % by weight.

In a particular aspect of the polyolefinic resin composition in accordance with the present invention, the melt flow rate of the aforesaid mixture does not exceed 4 g/10 minutes.

In another particular aspect of the polyolefinic resin composition in accordance with the present invention, at least 50 % by weight of the aforesaid polyolefinic resin is comprised of a propylene homopolymer which contains at least 70 % by weight of fractions with weight average molecular weights of at least 7 x 10⁵.

In still another particular aspect of the present invention, the polyolefinic resin composition contains 0.5 - 20 % by weight of a thermoplastic resin composition that, when solely formed into a test specimen, exhibits a tensile elongation at break of at least 50 %.

In another particular aspect of the present invention, the polyolefinic resin composition contains 0.5 - 20 % by weight of a thermoplastic resin composition that, when solely formed into a test specimen, exhibits a deflection temperature under load of at least 80 °C.

For the polyolefinic resin composition in accordance with the present invention, it is preferred that at least one type of the inorganic-based filler is calcium carbonate treated at its surface with fatty acid, and that the calcium carbonate is incorporated in the resin composition in the amount of 0.5 - 20 % by weight.

Preferably, the aforementioned calcium carbonate is heavy calcium carbonate.

In still another particular aspect of the polyolefinic resin composition in accordance with the present invention, it is preferred that at least one type of the inorganic-based filler is talc and that the talc is incorporated in the resin composition in the amount by weight of 10 - 85 %.

In accordance with another broad aspect of the present invention, a method is provided for preparing a polyolefinic resin compound which comprises a resin composition comprised primarily of a mixture containing a polyolefinic resin and 0.5 - 85 % by weight of an inorganic-based filler having a mean particle diameter up to 10 µm. Characteristaicaly, the method is characterized as extruding the resin composition through a screen with a mesh size of at least 70.

In accordance with another broad aspect of the present invention, a product is provided resulting from processing of the polyolefinic resin composition in accordance with the present invention.

In accordance with still another broad aspect of the present invention, a polyolefinic resin product is provided which comprises a resin composition comprised primarily of a mixture of a polyolefinic resin and an inorganic-based filler having a mean particle diameter up to 10 µm and incorporated in the resin composition in the amount of 0.5 - 85 % by weight.

In a particular aspect of the polyolefinic resin product in accordance with the present invention, the product exhibits a decrease in flexural modulus of 250 - 500 kgf/cm² for a rise of temperature of 1 °C at a surrounding temperature of 23 °C - 40 °C.

In a particular aspect of the polyolefinic resin product in accordance with the present invention, the product contains voids with a mean maximum diameter of 0.01 - 3 µm that occupy 0.1 - 10 % of the total volume.

In a particular aspect of the polyolefinic resin product in accordance with the present invention, at least 10 % of a surrounding region within a radial distance from the void that is 1.2 times as large as the maximum diameter of the void is formed from a composition which exhibits a tensile elongation at break of at least 50 %.

In a particular aspect of the polyolefinic resin product in accordance with the present invention, the product contains 0.5 - 20 % by weight of a composition which exhibits a deflection temperature under load of not below 80 °C.

In a particular aspect of the polyolefinic resin product in accordance with the present invention, the product is an extruded product.

In a particular aspect of the polyolefinic resin product in accordance with the present invention, the product takes the form of an automotive weatherstrip or a slide guide for an automotive side window glass.

In still another broad aspect of the present invention, a weatherstrip is provided including a weatherstrip main body made from an polyolefinic resin composition comprised primarily of a mixture containing a polyolefinic resin and an inorganic-based filler having a mean particle diameter up to 10 µm and incorporated in the resin composition in the amount by weight of 0.5 - 85 %, and a covering member provided to cover a surface of the weatherstrip main body and made from an ethylene-propylene-nonconjugated diene terpolymer or a styrene-isoprene block copolymer.

In a further aspect of the present invention, a method for fabrication of a weatherstrip is provided wherein the covering member is brought to cover the weatherstip main body by coextrusion.

In a further broad aspect of the present invention, a slide guide for an automotive side window glass is provided including a slide guide main body made from a polyolefinic resin composition comprised primarily of a mixture which contains a polyolefinic resin and an inorganic-based filler having a mean particle diameter up to 10 µm and incorporated in the resin composition in the amount by weight of 0.5 - 85 %, and a covering member provided to cover a surface of the slide guide main body and made from an ethylene-propylene-nonconjugated diene terpolymer or a styrene-isoprene block copolymer.

In a further aspect of the present invention, a method for fabrication of a slide guide for an automotive side window glass is provided wherein the covering member is brought to cover the slide guide main body by coextrusion.

### DETAILED DESCRIPTION OF THE INVENTION

The present invention is below described in detail.

In the present invention, the aforesaid polyolefinic resin encompasses all types of olefinic resins generally used in the preparation of compounds. Examples include polypropylene, polyethylene, poly(α-substitued olefin) and the like. Among them, polypropylene is preferred for its ability to provide high-rigidity products.

For the above polypropylene, a propylene homopolymer and an ethylene-propylene block copolymer may be used alone or in combination.

In the case where the propylene homopolymer is used for the polyolefinic resin, if a fraction of the polypropylene homopolymer that has a weight average molecular weight of at least 7 x 10⁵ is reduced in amount, the filler-loaded resin composition may exhibit an excessively high melt flow rate or fail to build sufficient rigidity. It is therefore preferred that such a polymer fraction occupies at least 70 % of the polypropylene homopolymer weight.

The weight average molecular weight, as used above, is a value obtained from a polystyrene equivalent molecular weight distribution determined by a high-temperature GPC.

The inorganic-based filler encompasses all types of inorganic fillers conventionally used in the preparation of compounds. Examples include talc, mica, calcium carbonate, kaolin, clay, magnesium hydroxide, calcium silicate, carbon black, graphite, iron powder, silica, diatomite, titanium oxide, iron oxide, pumice, antimony oxide, dolomite, dawsonite, montmorillonite and the like. These fillers may be subjected to various surface treatments.

Among the above-listed fillers, talc is preferred for its effectiveness to increase the rigidity of resulting products. Calcium carbonate treated at its surface with fatty acid is preferred for its ability to improve the impact resistance of resulting products. The preferred form of calcium carbonate is heavy calcium carbonate.

While the fatty acid used to treat a surface of calcium carbonate is not specified in type, those having a carboxyl group attached to a terminal of a straight-chain alkyl or alkenyl containing 5 - 30 carbon atoms in the alkyl or alkenyl are suitably used because of good handleability. Specific examples include oleic acid, elaidic acid, stearic acid, eicosanoic acid, undecanoic acid, erucic acid, behenic acid, linoleic acid and the like.

The inorganic-based filler is specified as having a mean particle diameter up to 10 µm, preferably up to 4 µm. If beyond 10 µm, the inorganic-based filler tends to show poor dispersibility to result in the failure to provide a reinforcing effect. Such a mean particle diameter is determined by a laser diffraction scattering method.

The inorganic-based filler content of the polyolefinic resin composition is specified as being 0.5 - 85 % by weight. If it is less than 0.5 % by weight, the resulting product may be poorly reinforced. If it exceeds 85 % by weight, resin-free regions between inorganic-based filler particles may be enlarged to impair the reinforcing effect.

Where calcium carbonate treated at its surface with fatty acid is used for the inorganic filler, its content in the polyolefinic resin composition is preferably adjusted to fall within the range of 5 - 20 % by weight. The use of calcium carbonate treated at its surface with fatty acid within such a range is effective to improve the impact resistance of a resulting product.

Various additives may be added to the polyolefinic resin composition, including a thermal stabilizer, weather resistance improver, lubricant, processing aid, pigment, coloring agent and the like.

Preferably, the mixture of the aforesaid polyolefinic resin and inorganic-based filler exhibits a melt flow rate of not exceeding 4 g/10 minutes. If the melt flow rate exceeds 4 g/10 minutes, the mixture when subjected to extrusion may be caused to flow at an excessively high rate, resulting in the difficulty to control its melt flow inside an extrusion die. Also, such a mixture undergoes a marked change in shape after it exits the die, often leading to the reduced dimensional accuracy of a resulting product. The melt flow rate, as used herein, is determined according to the condition #14 (testing at a temperature of 230 °C and under a load of 2.16 kgf) specified in Table 1 of JIS K 7210 (Testing method for melt flow rate of thermoplastics).

Even in the case where the mixture exhibits a melt flow rate of 0 g/10 minutes when determined according to the condition #14 of Table 1 of the above-specified testing method, if another testing according to the condition #17 of Table 1 of JIS K 7210 reveals a melt flow rate of below 0.01 g/10 minutes, the mixture when subjected to extrusion may become too low in fluidity to flow through the die and thus become incapable of being extruded. It is accordingly preferred that the mixture exhibits a melt flow rate of at least 0.01 g/10 minutes when determined according to the condition #17 of Table 17.

Preferably, the polyolefinic resin composition contains 0.5 - 20 % by weight of a thermoplastic resin composition which, when solely formed into a test specimen, exhibits a tensile elongation at break of at least 50 %.

The thermoplastic resin composition having a tensile elongation at break of at least 50 % (hereinafter referred to as an impact modifier composition) encompasses all types of thermoplastic resin compositions which can be fabricated into a No.2 test specimen according to JIS K 7311 and which exhibits an elongation at break of at least 50 % as a result of the tensile test at 23 °C. Since the impact modifier composition is used in combination with the polyolefinic resin, the aforesaid thermoplastic resin is preferably a polyolefin-based resin although its type is not particularly limited. Specific examples of thermoplastic resins include thermoplastic elastomers (e.g., TPO), noncrosslinked olefinic rubbers (e.g., EPDM, isoprene rubber and butadiene rubber), ethylene-propylene block copolymers and the like.

The above-listed thermoplastic resins may be used alone or in any combination thereof.

Preferably, the impact modifier composition is incorporated in the polyolefinic resin composition in the amount of 0.5 - 20 % by weight. If its content is below 0.5 % by weight, the effect of improving the impact strength of a resulting product may diminish. If its content exceeds 20 % by weight, a resulting product may become excessively soft to show a marked reduction in heat resistance.

Also in the present invention, the polyolefinic resin composition preferably contains 0.5 - 20 % by weight of a resin composition which exhibits a deflection temperature under load of at least 80 °C.

The resin composition having a deflection temperature under load of at least 80 °C (hereinafter referred to as a heat resistance modifier composition) encompasses all types of resin compositions which can be tested for deflection temperature under load according to the A method of JIS K 7202 and which exhibit deflection temperatures under load of at least 80 °C as a result of the testing. The resin useful for the heat resistance modifier composition is not particularly specified in type, but is preferably chosen from thermoplastic resins that are melt processable in the processing temperature range of polyolefinic resins. Specific examples of thermoplastic resins include acrylic resins, polycarbonates, polyethylene terephthalate, polyamides, polystyrenes, styrene-acrylonitrile copolymer, acrylonitrile-butadiene-styrene copolymer, chlorinated vinyl chloride resins and the like.

The above-listed thermoplastic resins may be used alone or in combination.

Preferably, the heat resistance modifier composition is incorporated in the polyolefinic resin composition in the amount of 0.5 - 20 % by weight. If its content is below 0.5 % by weight, the effect of improving heat resistance of a resulting product may diminish. If its content exceeds 20 % by weight, a resulting product may become excessively brittle to show a marked reduction in impact resistance.

In the case where calcium carbonate treated at its surface with fatty acid and other calcium carbonate are used in combination as the inorganic-based filler for inclusion in the polyolefinic resin composition of the present invention, a procedure may preferably be utilized wherein the other calcium carbonate is mixed with the impact modifier composition and/or the heat resistance modifier composition to form a mixture to which the calcium carbonate treated at its surface with fatty acid is subsequently added. Such a procedure permits the effective dispersion of the impact modifier composition and/or the heat resistance modifier composition throughout the polyolefinic resin. As a result, the effect of improving impact or heat resistance of a resulting product becomes particularly significant.

If such constituted, the polyolefinic resin composition of the present invention exhibits good extrudability and can result in a product that has a good balance in performance of rigidity and impact resistance. Therefore, the resulting product is suitable for use as the automotive weatherstrip.

The above-described resin composition can be kneaded and extruded to provide a resin compound. Preferably, the resin composition is extruded through a screen with a mesh size of at least 70. The screen mesh size is suitably determined depending upon the type of the kneading and extruding system, the amount of the filler used and the like. However, if the mesh size is below 70, the flow of the melt mixture may become too coarse from the beginning till the end of kneading to promote dispersion of the filler therein. This poor dispersion of the filler in the resin compound results in the formation of products inferior in rigidity and impact resistance.

Particularly when the kneading and extruding system consists of a single-screw extruder which provides a minimum dispersing effect attributed to the screw, the rigidity and impact resistance of resulting products tend to be lowered.

The upper limit of the screen mesh size is not particularly specified, but preferably does not exceed 500, more preferably 300. If the mesh size exceeds 500, the output rate of the compound from the kneading and extruding system is excessively reduced and a heavier load is imposed on the system, leading to the economical disadvantage.

The screen is generally preferred to locate between a leading end of an extruder and an adapter of an extrusion die, although it may locate within the die.

Although stainless steel is generally preferred, the material type of the screen is not particularly specified, so long as it can retain its shape in the temperature range where the olefinic resin composition is caused to melt. Examples of useful materials include steel, copper, aluminum and the like.

The resin composition is extruded through the screen having the above-specified mesh size into strands which are subsequently cooled and cut to obtain a compound in the form of pellets.

The compound thus obtained can be made into products by a conventional processing technique such as extrusion, injection molding or the like.

As constituted in the manner as described above, the polyolefinic resin compound of the present invention can result in products which exhibit a good balance of rigidity and impact resistance.

Accordingly, this compound is particularly suitable for use as a weatherstrip and a slide guide for a side window glass. Other automotive uses include, for example, a roof - -- and side --- which are mounted to a roof and side of an automotive body, center pillar, front pillar and the like.

The polyolefinic resin product in accordance with the present invention is obtained from the above-described polyolefinic resin composition or resin compound in accordance with the present invention by utilizing various processing techniques as described above.

The polyolefinic resin product in accordance with the present invention preferably exhibits a flexural modulus of at least 20,000 kgf/cm² at a surrounding temperature of 23 °C. In the case where this product is used as an automotive weatherstrip, the automotive weatherstrip having such a flexural modulus hardly comes off after it has been mounted to an automotive window frame.

In general, the modulus decreases curvilinearly rather than linearly with temperature. The initial decreasing curve of modulus over the range from room temperature to 40 °C affects significantly on the capability of the product to sustain its rigidity recorded at 80 °C. At temperatures beyond the above-specified temperature range, the variation of modulus with temperature becomes smaller. Therefore, the rate of change in modulus must be observed carefully in the temperature range (23 °C - 40 °C) where the modulus shows a marked decrease.

At a surrounding temperature within the range of 23 °C - 40 °C, the above-described product preferably exhibits a decrease in flexural modulus of 250 - 500 kgf/cm² for a rise of temperature of 1 °C. Such products are suitable for use as automotive parts, such as a weatherstrip and a slide guide for a side window glass, which are exposed to high temperatures while in use.

The decrease in modulus of polyolefinic resins hardly falls below 250 kgf/cm², without substantial modification thereof. This often makes them uneconomical.

The decrease in modulus of exceeding 500 kgf/cm² may be too large for resin products to be used for automotive parts which are exposed to temperatures of probably around 80 °C when in practical use.

The decrease in modulus of 250 - 500 kgf/cm² for a rise of temperature of 1 °C can be achieved by a resin product resulting from a combination of an olefinic resin and an inorganic filler. Such a resin product can also sustain the effective modulus even if exposed to a working temperature of 80 °C.

The flexural modulus, as used herein, is determined by a flexural test according to JIS K 7203.

The polyolefinic resin product preferably contains voids which have a mean maximum diameter of 0.01 - 3 µm, more preferably of 0.05 - 1 µm, and which occupy 0.1 - 10 %, preferably 0.5 - 5 % of the total volume of the product. The mean maximum diameter, as used herein, refers to a mean value of maximum diameters measured for at least 100 voids randomly sampled from the product.

In the case where 0.1 - 10 % of the total volume of the product is occupied by voids with a mean maximum diameter of 0.01 - 3 µm, when the product is subjected, e.g., to a large deformation such as impact fracture, stress concentration occurs in the vicinities of individual voids to initiate deformation.' Due to the presence of these deformation points distributed throughout the product in the above-specified size and volume, designed deformation is caused to occur uniformly to distribute a deformation load. The product thus exhibits improved impact resistance due to the presence of such voids which, for example, increases a total energy from the beginning of deformation till the final fracture. By contrast, without such voids, abrupt fracture develops in the product due to the stress concentration that occurs at unexpected sites and initiates nonuniform deformation.

There are a variety of techniques by which voids can be introduced in polyolefinic resin products. Examples include incorporation therein of a void-producing inorganic filler, void-containing resin particles or a blowing agent. While either technique is suitably used, the inclusion of a void-producing inorganic filler is preferred for its more reliable, stable and economical void-producing performance.

The void-producing inorgainc filler is not particularly specified. Calcium carbonate treated at its surface with fatty acid, as described earlier, is an example which can be suitably used for the filler.

The shape of the void space is not particularly specified, but is preferably close to a circle. If the void shape is closer to a circle, the void space tends to deform more uniformly when stress concentration is produced in the product by the application of a large deformation thereto.

That is, the simultaneous improvements in impact resistance, rigidity, heat resistance of the polyolefinic resin product can be achieved by the inclusion of 0.1 - 10 % by volume of voids with a mean maximum diameter of 0.01 - 3 µm.

If the mean maximum diameter of voids is below 0.01 µm, the improvement in impact resistance of a resulting product may become insufficient. By contrast, if the mean maximum diameter of voids exceeds 3 µm, the flexural rigidity and heat resistance of a resulting product may decrease.

Also, if the void content of the polyolefinic resin product is below 0.1 % by volume, the improvement in impact resistance thereof may become insufficient. By contrast, if the void content of the polyolefinic resin product exceeds 10 % by volume, the product may exhibit the reduced flexural rigidity and heat resistance even if the mean maximum diameter of voids falls within the range of 0.01 - 3 µm.

The polyolefinic resin product in accordance with the present invention contains voids having a mean maximum diameter of 0.01 -3 µm and at least 10 % of a surrounding region within a radial distance from the void that is 1.2 times as large as its maximum diameter is formed from a composition which exhibits a tensile elongation of at least 50 % at breakage.

When a large deformation, e.g., impact fracture, is applied to the product, the energy required to produce stress concentrion in the vicinities of voids and start breaking the product becomes large if at least 10 % of the surrounding region within a radial distance from the void that is 1.2 times as large as its maximum diameter is formed from a composition which has a tensile elongation at break of at least 50 %. This results in a marked improvement in impact resistance of the product.

The tensile elongation at break of a composition which exists in a surrounding region outside the radial distance from the void that is 1.2 times as large as its maximum diameter is not particularly specified. This is because a contribution of such a region remote from the void to improvement in impact resistance is small.

If less than 10 % of the surrounding region within a radial distance from the void that is 1.2 times as large as its maximum diameter is formed from a composition which exhibits a tensile elongation at break of at least 50 %, it is difficult to obtain the sufficient effect to improve the impact resistance.

The impract modifier compositions as described earlier can be used as the composition having a tensile elongation at break of at least 50 %.

Also, the polyolefinic resin composition preferably contains 0.5 - 20 % by weight of a composition which shows a deflection temperature under load of at least 80 °C, i.e., the above-described heat resistance modifier composition.

Incorporation of the composition which exhibits a deflection temperature under load of at least 80 °C results in a marked increase in heat distortion temperature, i.e., heat resistance of the product as a whole. This suppresses the reduction in rigidity of the product while elevated in temperature. Accordingly, when the product is used as an automotive weatherstrip, it hardly comes off a door.

If the composition exhibits a deflection temperature under load of below 80 °C, an improvement in heat resistance of the product may become insufficient.

Also, if the composition which exhibits a deflection temperature under load of at least 80 °C is contained in the product in the amount of below 0.5 % by weight, a sufficient improvement in heat resistance of the product may not be achieved. By contrast, if the composition content exceeds 20 % by weight, the product may become brittle to reduce its impact resistance.

Preferably, the polyolefinic resin product in accordance with the present invention is an extruded resin product.

The processing technique used to obtain the extruded resin product is not a special one. For example, the above-described polyolefinic resin composition may be uniformly dispersed in a mixer, such as in a super mixer, to obtain a homogeneous mixture. The mixture is then extruded according to a conventional extrusion procedure. Alternatively, the mixture may be supplied to an extruder where it is cut and shaped into pellets by a pelletizer and then extruded according to a conventional extrusion procedure.

As stated above, the polyolefinic resin product in accordance with the present invention exhibits improved impact resistance, rigidity and heat resistance and shows an extremely good balance of performances. These properties make it suitable for use as an automotive weatherstrip or other automotive parts.

The weatherstrip provided in another aspect of the present invention includes a weatherstrip main body made from the aforesaid polyolefinic resin composition, and a covering member provided to overlie the weatherstrip main body and made from an ethylene-propylene-nonconjugated diene terpolymer or a styrene-isoprene block copolymer.

The use of polyolefinic resin as the weatherstrip forming material and the provision of the covering member on a surface of the resulting product further enhance the scuff resistance of the product.

The ethylene-propylene-nonconjugated diene terpolymer (hereinafter referred to as EPDM) encompasses all those conventionally used in the art.

Examples of nonconjugated diene components include ethylidenenorbornene, dicyclopentadiene and the like. Preferred among them is ethylidenenorbornene.

The aforesaid EPDM may be used alone, or in combination with an olefinic resin for the purpose of adjusting the melt fusion property or melt viscosity (processing temperature). However, the increased olefinic resin content may impair the scuff resistance. Preferably, the olefinic resin content of the covering member is adjusted to fall within 80 % by weight.

The styrene-isoprene block copolymer comprises a first component in the form of styrene and a second component in the form of isoprene. The second component may be a combination of isoprene and butadiene.

In the case where the second component is isoprene alone or a combined resin composition of isoprene and butadiene, the second component block portions preferably have at least 40 % by weight of 3,4- and 1,2-contents.

The styrene-isoprene block copolymer preferably has a molecular weight of 30,000 - 300,000, more preferably of 80,000 - 250,000.

The styrene-isoprene block copolymer, if having a molecular weight of below 30,000, may exhibit the reduced strength and elongation at fracture and, if having a molecular weight of exceeding 300,000, may become difficult to be subjected to coextrusion.

The styrene-isoprene block copolymer is commercially available, for example, from Kuraray Co., Ltd. under the trade designation "HYBRAR".

The styrene-isoprene block copolymer may be used alone or in combination with an olefinic resin for the purpose of adjusting the melt fusion property or melt viscosity (processing temperature). However, the increased olefinic resin content may impair the scuff resistance. Preferably, the olefinic resin content of the covering member does not exceed 80 % by weight.

Various additives can be loaded in the aforementioned EPDM and styrene-isoprene copolymer, if necessary. Such additives include, for example, thermal stabilizers such as antioxidants and UV absorbers; weather resistance modifiers; processing aids such as lubricants and viscosity modifiers; pigments and colorants.

In the case where the product is an extruded product, a coextrusion technique may be utilized to place the covering member on a surface of the product while processed.

### BRIEF DESCRIPTION OF THE DRAWING

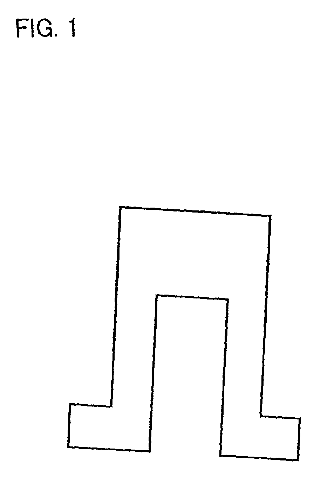

Figure 1 is a sectional view illustrating a product for use in the determination of its deflection at 80 °C.

### BEST MODE FOR CARRYING OUT THE INVENTION

The present invention is below described in more detail by referring to the following non-limiting Examples.

### EXAMPLES 1 - 3 AND COMPARATIVE EXAMPLES 1 - 3

An ethylene-propylene block copolymer and talc having a mean particle diameter specified in Table 1 were blended in the proportions (% by weight) also specified in Table 1 to prepare resin compositions. Each resin composition was fed into a twin-screw kneading and extruding machine from which it was extruded into strands, followed by cutting into pellets.

These pellets were supplied to a single-screw extruder and fabricated into a 6.4 mm thick and 50 mm wide flat sheet product. Comparative Example 2 resulted in the occurrence of crook in the product exiting from a die and thus failed to provide a flat sheet product. In Comparative Example 3, a motor in the twin-screw kneading and extruding machine was overloaded to result in the failure to effect extrusion.

The above-prepared resin compositions and products were subjected to the following performance evaluation tests. The results are given in Table 1.
(1) Melt Flow Rate
   A melt flow rate (MFR) of each resin composition was determined according to JIS K 7201.
(2) Flexural Modulus
   A 127 mm long and 15 mm wide specimen was cut out from each product. The specimen was placed under a flexural test according to JIS K 7203 to determine its flexural modulus (kgf/cm²).
(3) Izod Impact Test
   A 64 mm long and 12.7 mm wide specimen was cut out from each product. Using this size-2 A specimen, a notched Izod impact test was conducted according to JIS K 7110 to determine Izod impact value (kgf·cm/cm²).

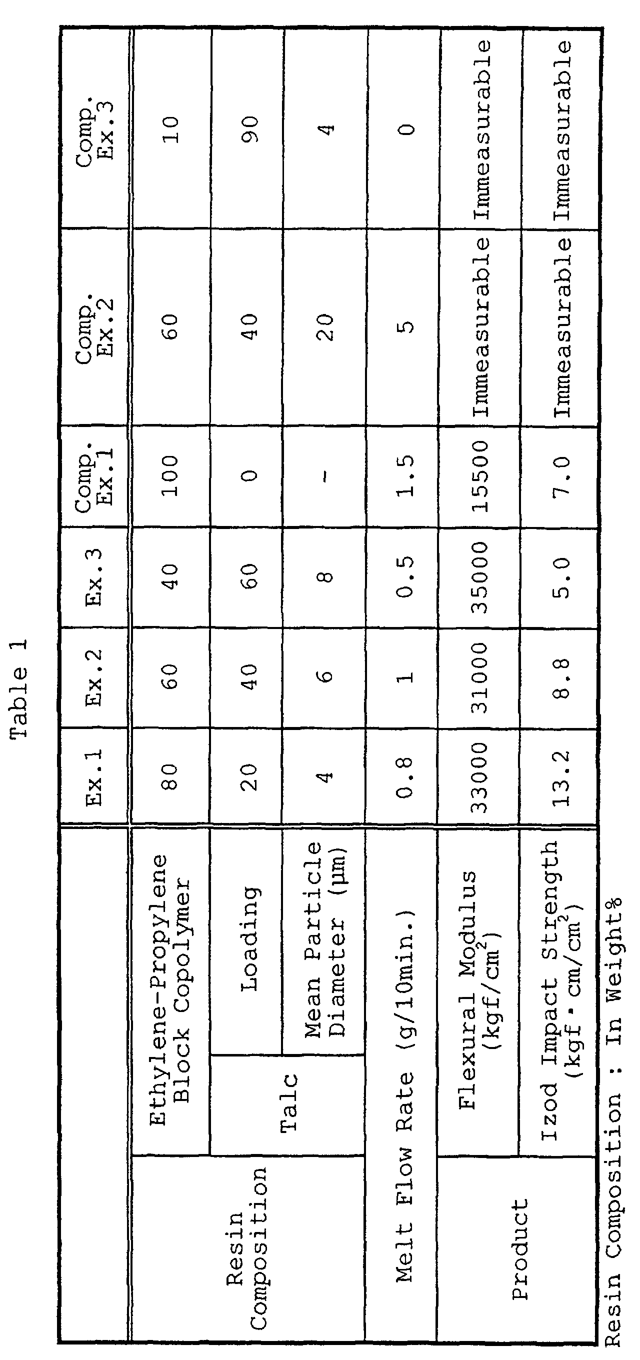

### EXAMPLES 4 - 7 AND COMPARATIVE EXAMPLES 4 - 6

A propylene homopolymer, talc and calcium carbonate treated at its surface with oleic acid respectively having the mean particle diameters specified in Table 2, and an impact modifier composition were blended in the proportions (% by weight) also specified in Table 2 to prepare resin compositions. Each resin composition was fed into a twin-screw kneading and extruding machine from which it was extruded into strands, followed by cutting into pellets.

These pellets were supplied to a single-screw extruder and fabricated into a 6.4 mm thick and 50 mm wide flat sheet product. However, in Comparative Example 6, the resin composition was mixed and pressed into a flat sheet form by a heat pressure kneader, since it was found incapable of being extruded from the twin-screw kneading and extruding machine. Also in Comparative Example 6, EPDM and calcium carbonate treated at its surface with oleic acid were mixed in a separate extruder to provide a melt kneaded mixture. This mixture was then supplied to a center of a cylinder in the aforementioned twin-screw kneading and extruding machine.

In Table 2, TPO represents an olefinic thermoplastic elastomer, EPDM represents an ethylene-propylene-diene terpolymer and EPM represents an ethylene-propylene copolymer.

The above-prepared resin compositions and products were evaluated for performances in the same manner as in Example 1. Also, a 127 mm long and 12.7 mm high specimen was cut out from each product to determine a deflection temperature under load according to the A method of JIS K 7207. The results are shown in Table 2.

The flat sheet product obtained in Comparative Example 6 was found too brittle to be cut into a test specimen for the flexural test.

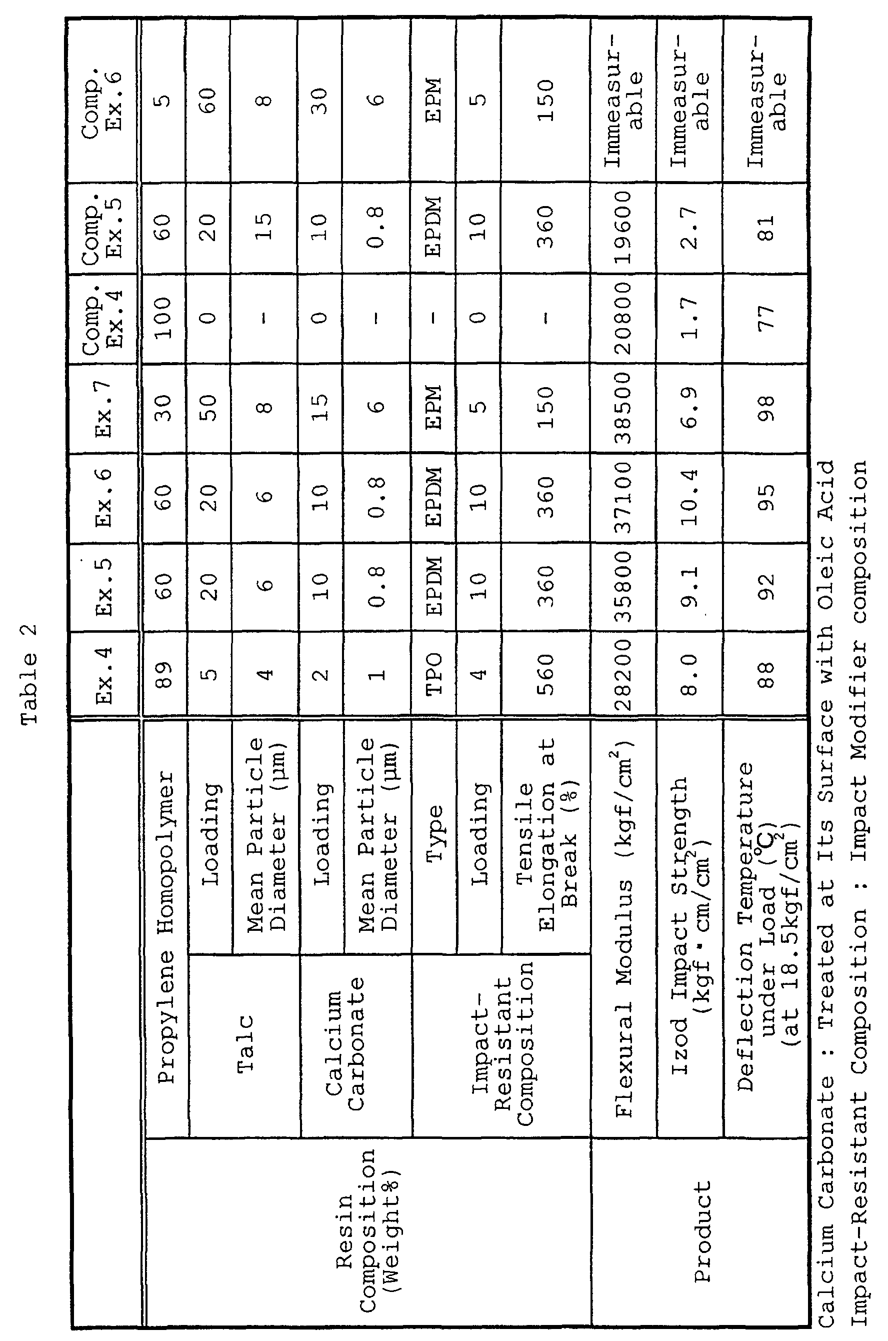

### EXAMPLES 8 - 11 AND COMPARATIVE EXAMPLES 7 AND 8

A propylene homopolymer, talc and calcium carbonate treated at its surface with oleic acid respectively having mean particle diameters specified in Table 3, and a heat resistance modifier composition were blended in the proportions also specified in Table 3 to prepare resin compositions. Each resin composition was fed into a twin-screw kneading and extruding machine from which it was extruded into strands, followed by cutting into pellets. These pellets were supplied to a single-screw extruder and fabricated into a 6.4 mm thick and 50 mm wide flat sheet product.

In Comparative Example 8, the resin composition was mixed and pressed into a flat sheet form by a heat pressure kneader, since it was found incapable of being extruded from the twin-screw kneading and extruding machine. In Comparative Example 10, calcium carbonate treated at its surface with oleic acid was supplied to a central portion of a cylinder in the twin-screw kneading and extruding machine, while other ingredients were fed into the extruder through a hopper.

In Table 3, PC, as entered in a list of heat resistance modifier compositions, represents polycarbonate, PMMA represents polymethyl methacrylate and PSt represents polystyrene.

Also, a product was formed solely from each heat resistance modifier composition to determine a temperature of deflection under load according to the A method of JIS K 7207. The results are shown in Table 3.

Test specimens were cut out from each flat sheet product in the same manner as in Example 4 to conduct a flexural test, Izod impact test and deflection under load test. These results are given in Table 3.

The flat sheet product obtained in Comparative Example 8 was found too brittle to be cut into test specimens for the above tests.

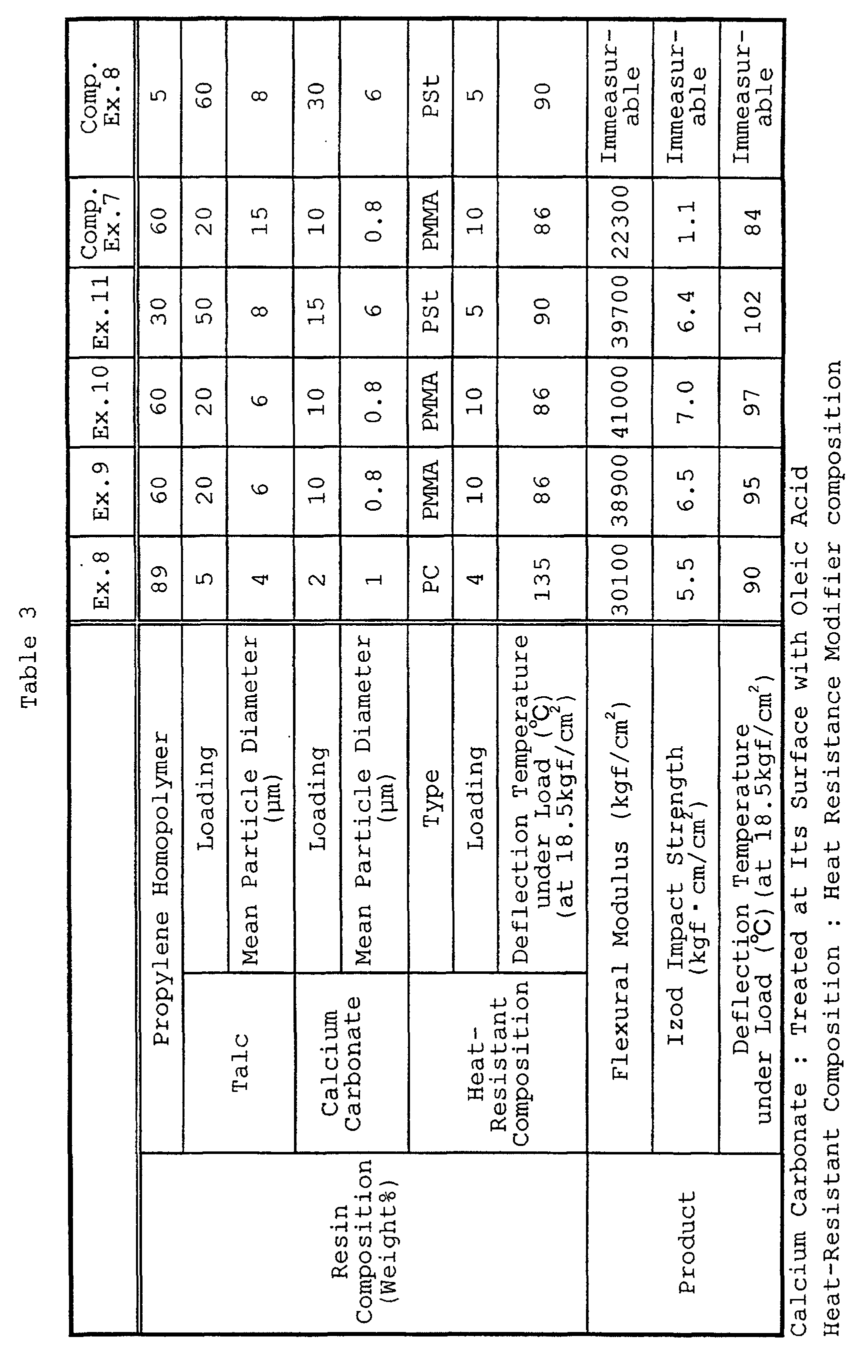

### EXAMPLES 12 - 15 AND COMPARATIVE EXAMPLES 9 - 11

An ethylene-propylene block copolymer, talc and calcium carbonate treated at its surface with oleic acid (with mean particle diameters specified in Table 4) were blended in the proportions also specified in Table 4 to prepare resin compositions. Each resin composition was fed into a twin-screw kneading and extruding machine from which it was extruded into strands, followed by cutting into pellets. These pellets were supplied to a single-screw extruder and fabricated into a 6.4 mm thick and 50 mm wide flat sheet product. Comparative Example 9 resulted in the occurrence of crook in the product exiting from a die and thus failed to provide a flat sheet product. In Comparative Example 11, a motor in the twin-screw kneading and extruding machine was overloaded to result in the failure to effect extrusion.

The above-prepared resin compositions and products were evaluated for performances in the same manner as in Example 1. In the determination of flexural modulus, a retention of flexural modulus was also determined at 80 °C atmosphere.

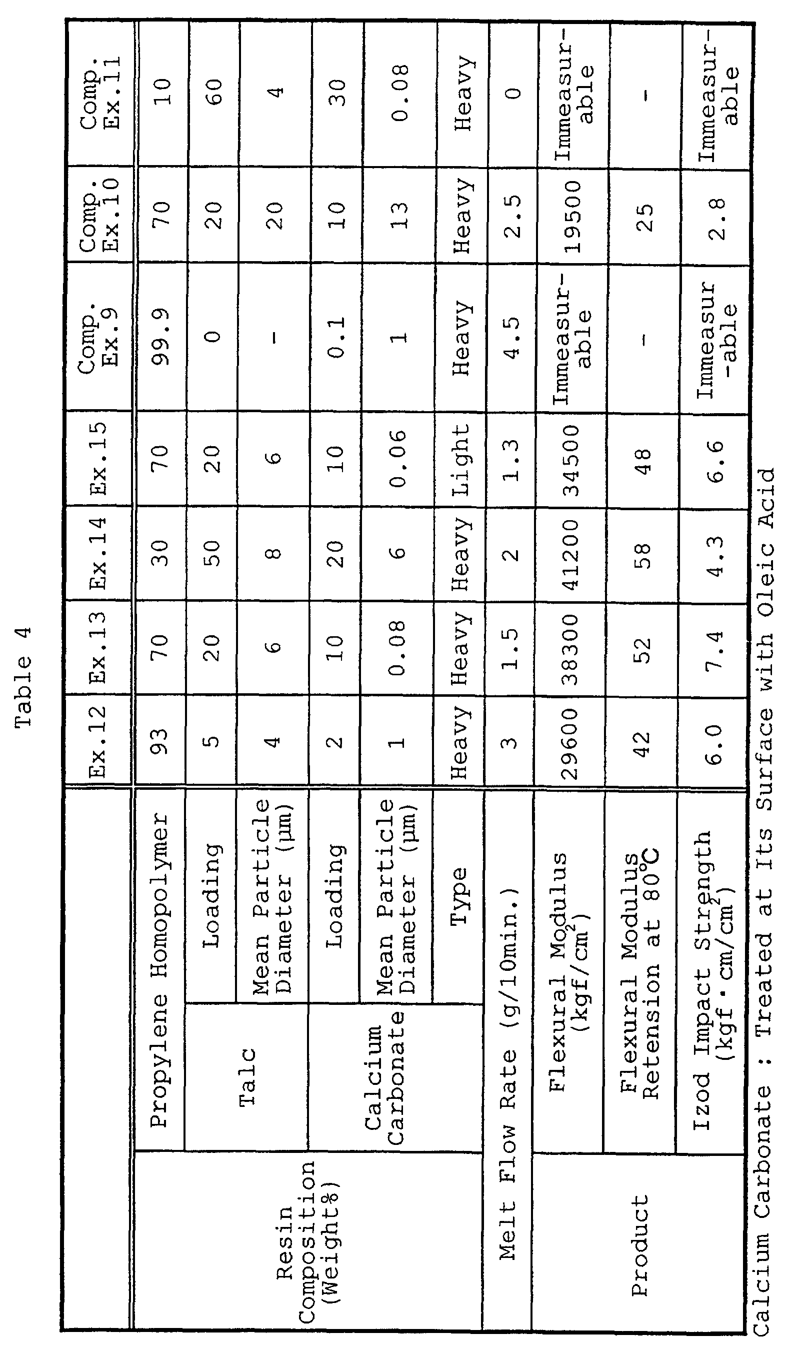

### EXAMPLES 16 - 18 AND COMPARATIVE EXAMPLES 12 - 14

An ethylene-propylene block copolymer, talc and calcium carbonate treated at its surface with oleic acid (with mean particle diameters specified in Table 5) were blended in the proportions also specified in Table 5 to prepare resin compositions. Each resin composition was fed into a twin-screw kneading and extruding machine from which it was extruded into strands, followed by cutting into pellets.

These pellets were supplied to a single-screw extruder and fabricated into a 6.4 mm thick and 50 mm wide flat sheet product. Comparative Example 12 resulted in the occurrence of crook in the product exiting from a die and thus failed to provide a flat sheet product. In Comparative Example 14, the resin composition was mixed and pressed into a flat sheet form by a heat pressure kneader, since it was found incapable of being extruded into strands by the twin-screw kneading and extruding machine.

The above-prepared resin compositions and products were evaluated for performances in the same manner as in Example 1.

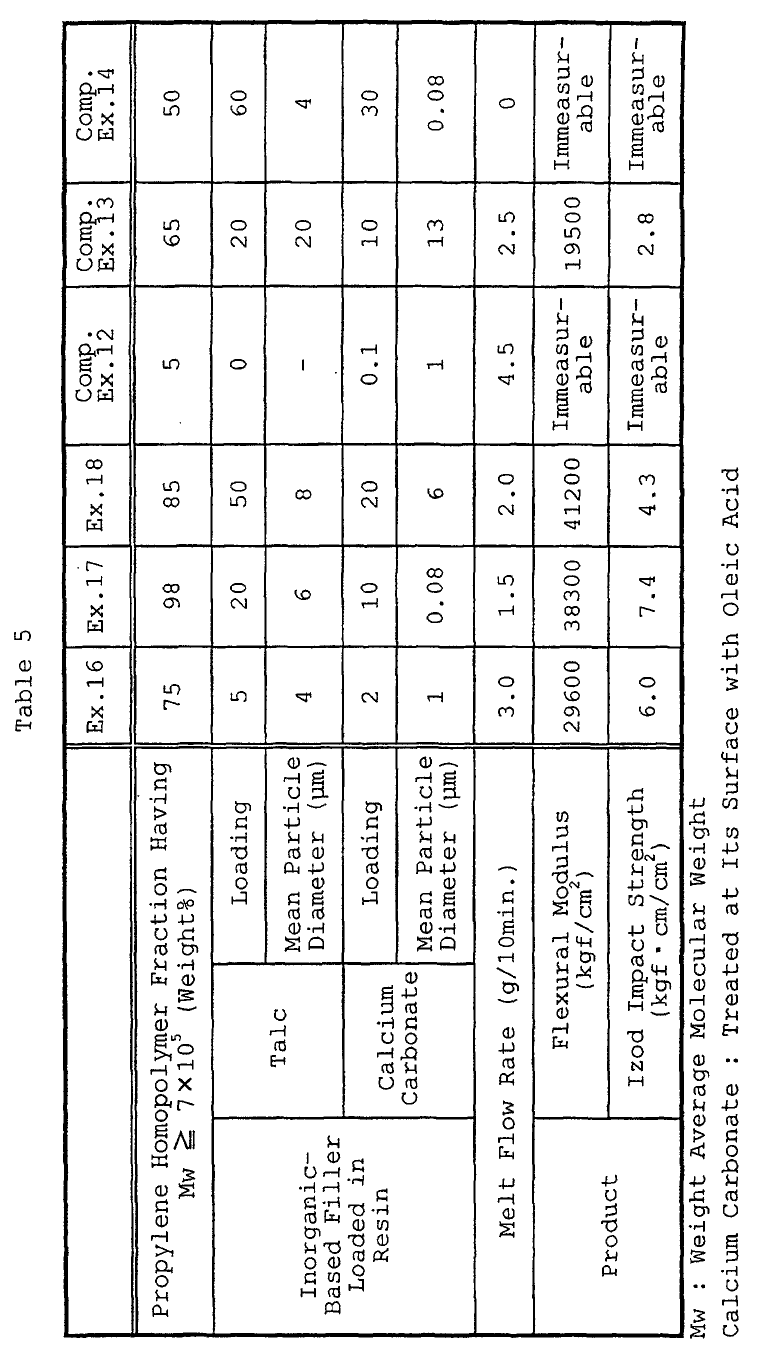

### EXAMPLES 19 - 21 AND COMPARATIVE EXAMPLES 15 - 17

A propylene homopolymer and talc (with a mean particle diameter specified in Table 6) were blended in proportions specified in Table 6 to prepare resin compositions. Each resin composition was fed into a twin-screw kneading and extruding machine and extruded through a screen with a mesh size specified in Table 6 into strands, followed by cutting into pellets.

These pellets were supplied to a single-screw extruder and fabricated into a 6.4 mm thick and 50 mm wide flat sheet product. Comparative Example 17 resulted in the occurrence of crook in the product exiting from a die and thus failed to provide a flat sheet product.

Test specimens were cut out from each flat sheet product in the same manner as in Example 1 to conduct (1) flexural test and (2) Izod impact test.

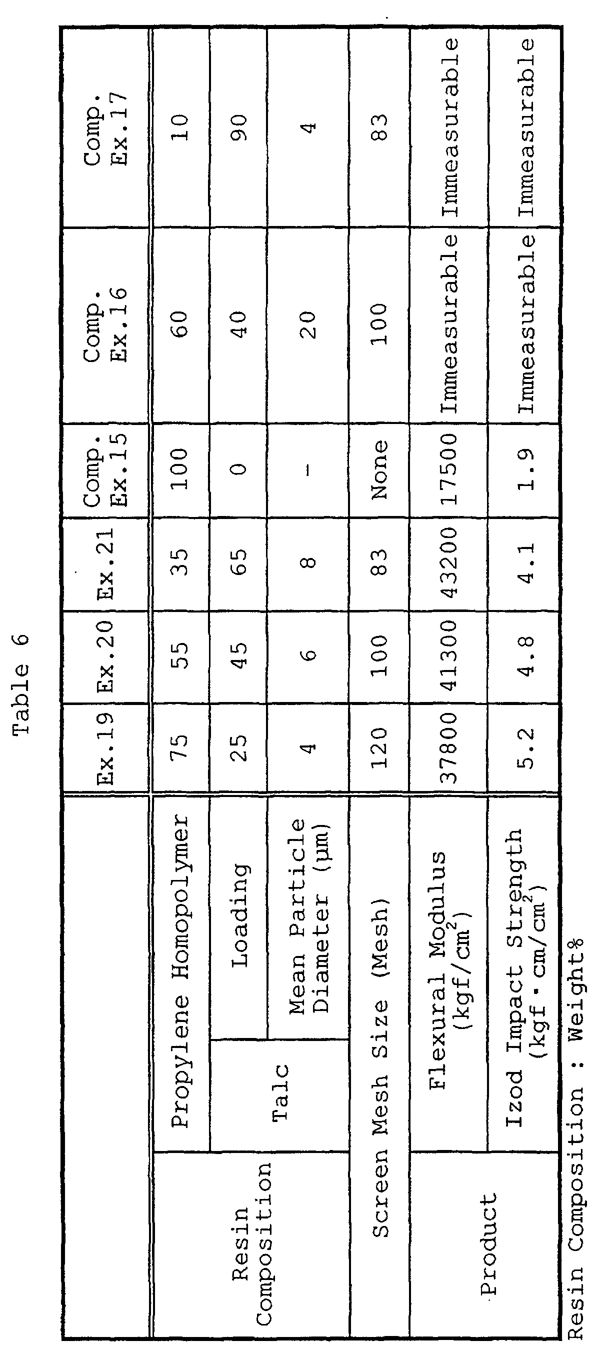

### EXAMPLES 22 - 24 AND COMPARATIVE EXAMPLES 18 AND 19

A propylene homopolymer or an ethylene-propylene block copolymer, and talc or calcium carbonate (with a mean particle diameter specified in Table 7) were blended in the proportions also specified in Table 7 to prepare resin compositions. Each resin composition was fed into a twin-screw kneading and extruding machine from which it was extruded into strands, followed by cutting into pellets.

These pellets were supplied to a single-screw extruder and fabricated into a 6.4 mm thick and 50 mm wide flat sheet product.

The resulting products were subjected to the following performance evaluation tests. The results are given in Table 7.

### (1) Modulus Reduction

A test specimen was cut out from each flat sheet product. Using this test specimen, a flexural test was conducted at a surrounding temperature of 23 - 40 °C according to JIS K 7203 to determine a flexural modulus.

### (2) Product Deflection at 80 °C

The pellets were supplied to a single-screw extruder from which a product shown in Figure 1 as having a generally U-shaped section was extruded. The 500 mm long product was fixed at its longitudinal ends and placed under the 80 °C atmosphere. Thereafter, a specified load was applied to a center of the product to measure a deflection.

Also, the applicability of each product to automotive parts was determined on the basis of the above results. In Comparative Example 19, an extruder motor was overloaded to result in the failure to provide a product.

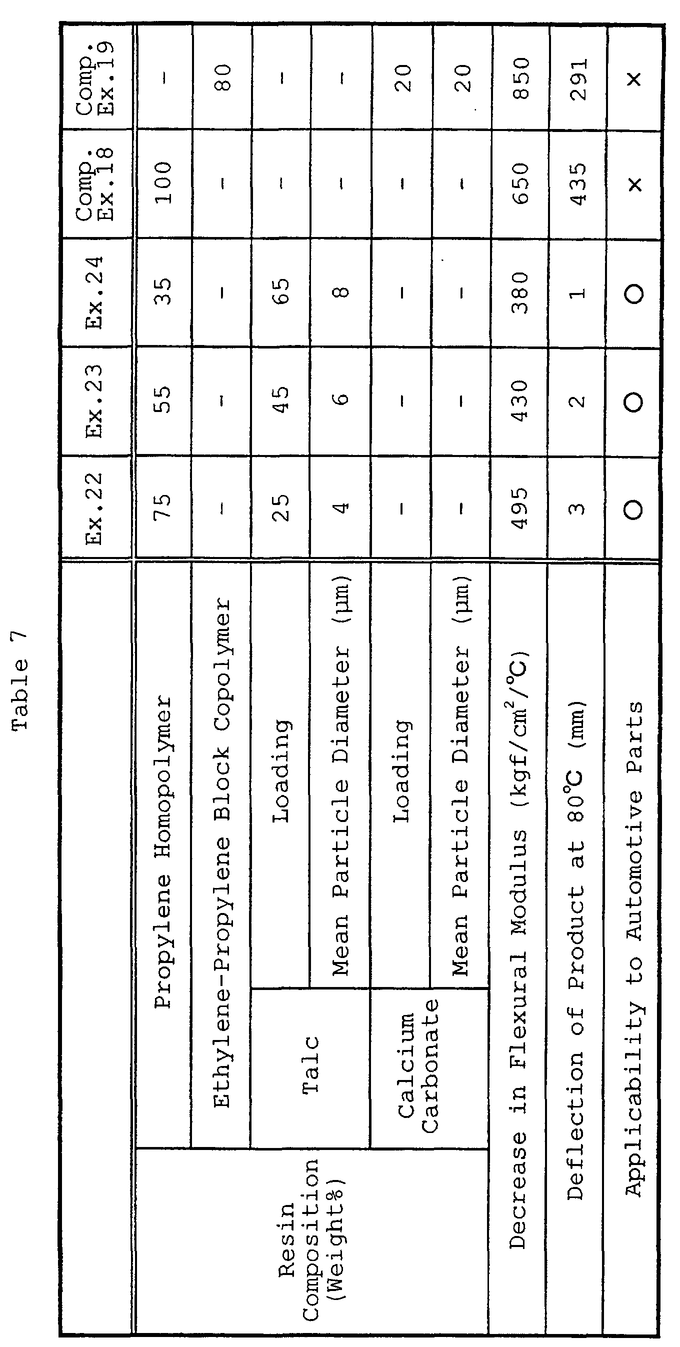

### EXAMPLES 25 - 27

### 1. Fabrication of Polyolefinic Resin Products

77 weight % of a propylene homopolymer, 18 weight % of talc with a mean particle diameter of 4 µm, and 5 weight % of calcium carbonate having a mean particle diameter specified in Table 8 were blended to provide a polyolefinic resin composition. This resin composition was then supplied to a twin-screw kneading and extruding machine which extruded it into strands. The strands were then cut by a pelletizer into pellets. These pellets were fed into a single-screw extruder and fabricated into a 6.4 mm thick and 50 mm wide flat sheet product. As a result, three different flat sheet products were obtained. Each flat sheet product was determined for a mean maximum diameter (µm) of voids and void content (volume %). The results are shown in Table 8.

### 2. Evaluation

The above-obtained products were evaluated for (1) Izod impact value and (2) flexural modulus in the same manner as in Example 1, and also evaluated for (3) temperautre of deflection under load according to the following procedure. The results are given in Table 8.
(3) Temperature of Deflection Under Load: A 127 mm long and 12.7 mm high specimen was cut out from each product and a temperature (°C) of deflection under load was determined in accordance with the A method of JIS K 7207 (flexural stress of 18.5 kgf/cm²).

### EXAMPLE 28

As specified in Table 8, 71 weight % of a propylene homopolymer, 18 weight % of talc, 5 weight % of calcium carbonate, and 6 weight % of olefinic thermoplastic elastomer (TPO) as an impact modifier were mixed to provide a polyolefinic resin composition. Otherwise, the procedure of Example 27 was followed to obtain a polyolefinic resin product. For the resulting product, a mean maximum diameter (µm) of voids and a void content (volume %) were determined and reported in Table 8. The tensile elongation at break of TPO was 560 % when determined according to JIS K 7311. Also, TPO was found to occupy 100 % of the surrounding region within a radial distance from the void that is 1.2 times as large as its maximum diameter.

### EXAMPLE 29

As specified in Table 8, 73 weight % of a propylene homopolymer, 18 weight % of talc, 5 weight % of calcium carbonate, and 4 weight % of an ethylene-propylene-diene terpolymer (EPDM) as an impact modifier were blended to provide a polyolefinic resin composition. Otherwise, the procedure of Example 27 was followed to obtain a polyolefinic resin product. For the resulting product, the mean maximum diameter (µm) of voids and a void content were determined and reported in Table 8. The tensile elongation at break of EPDM was 360 % when determined according to JIS K 7311. Also, EPDM was found to occupy 50 % of the surrounding region within a radial distance from the void that is 1.2 times as large as its maximum diameter.

### EXAMPLE 30

As specified in Table 8, 73 weight % of a propylene homopolymer, 18 weight % of talc, 5 weight % of calcium carbonate, and 4 weight % of a polycarbonate resin (PC) as an impact modifier were blended to provide a polyolefinic resin composition. Otherwise, the procedure of Example 27 was followed to obtain a polyolefinic resin product. For the resulting product, a mean maximum diameter (µm) of voids and a void content (volume %) were determined and reported in Table 8. The deflection temperature under load of PC was 135 °C when determined according to JIS K 7207.

### EXAMPLE 31

As specified in Table 8, 67 weight % of a propylene homopolymer, 18 weight % of talc, 5 weight % of calcium carbonate, and 10 weight % of a polymethyl methacrylate resin (PMMA) as a heat resistance modifier were blended to provide a polyolefinic resin composition. Otherwise, the procedure of Example 27 was followed to obtain a polyolefinic resin product. For the resulting product, a mean maximum diameter (µm) of voids and a void content were determined and reported in Table 8. The deflection temperature under load of PMMA was 86 °C when determined according to JIS K 7207.

The products obtained in Examples 25 - 31 were evaluated for performances ((1) Izod impact value, (2) flexural modulus and (3) deflection temperature under load) in the same manner as in Example 24. The results are shown in Table 8.

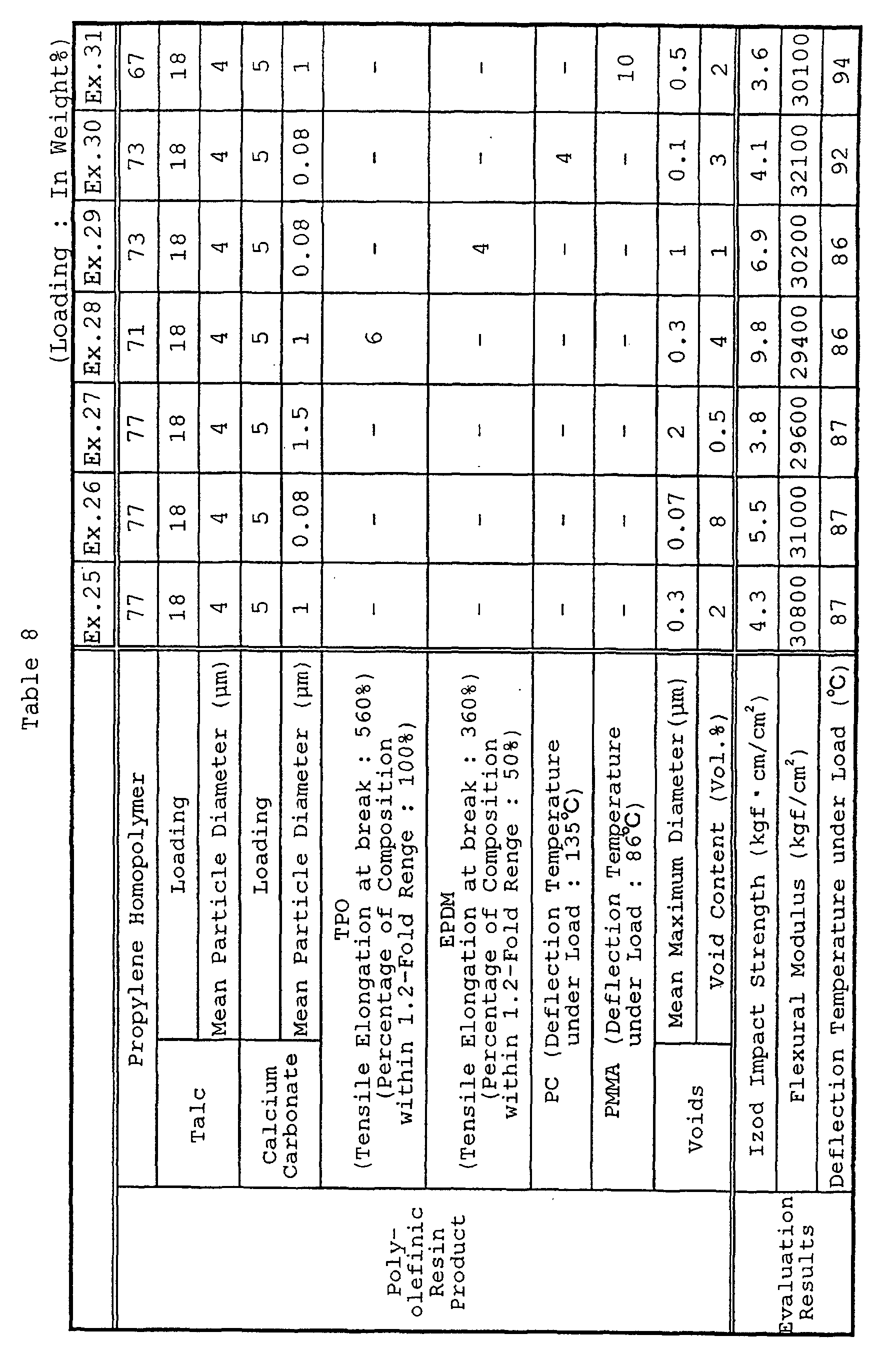

As can be clearly seen from Table 8, the polyolefinic resin products obtained in Examples 25 - 31 exhibit high values for all of Izod impact strength, flexural modulus and deflection temperature under load. These demonstrate their superior balance of impact resistance, rigidity and heat resistance.

### EXAMPLES 32 - 35

55 weight % of a propylene homopolymer, 35 weight % of talc with a mean particle diameter of 4 µm, 5 weight % of calcium carbonate treated at its surface with oleic acid having a mean particle diameter of 1 µm, 4 weight % of olefinic thermoplastic elastomer (TPO) as an impact modifier and 1 weight % of pigment were blended to provide a resin composition. This resin composition was then supplied to a twin-screw kneading and extruding machine which extruded it into strands, followed by cutting into pellets. The pellets were fed into a single-screw extruder. The subsequent coextrusion provided a 2.5 mm thick and 50 mm wide flat sheet product covered at its one surface entirely with a 0.5 mm thick covering member made of the composition specified in Table 9.

The covering member facing side of each flat sheet product was determined for a pencil scrath value according to the manual testing method described in JIS K 5400. The results are reported in Table 9.

**Table 9**

| | Ex.32 | Ex.33 | Ex.34 | Ex.35 |
|---|---|---|---|---|
| EPDM | 100 | - | 50 | - |
| Styrene-Isoprene Block Compolymer | - | 100 | - | 50 |
| Propylene-Ethylene Random Copolymer | - | - | 50 | - |
| High-Density Polyethylene | - | - | - | 50 |
| Impact Modifer TPO | - | - | - | - |
| Pencil Scratch Level | H | H | HB | HB |

## Claims

1. A polyolefinic resin composition comprised primarily of a mixture of a polyolefinic resin and an inorganic filler having a mean particle diameter of not exceeding 10 µm, **characterized in that** said inorganic-based filler is incorporated in the resin composition in the amount of 0.5 - 85 % by weight.

2. The polyolefinic resin composition as recited in claim 1, wherein a melt flow rate of said mixture does not exceed 4 g/10 minutes.

3. The polyolefinic resin composition as recited in claim 1 or 2, wherein said polyolefinic resin contains at least 50 % by weight of a propylene homopolymer and the propylene homopolymer contains at least 70 % by weight of polymer fractions having weight average molecular weights of at least 7 x 10⁵.

4. The polyolefinic resin composition as recited in any one of claims 1 - 3, **characterized** as containing 0.5 - 20 % by weight of a thermoplastic resin composition which, when solely fabricated into a test piece, exhibits a tensile elongation at break of at least 50 %.

5. The polyolefinic resin composition as recited in any one of claims 1 - 4, **characterized** as containing 0.5 - 20 % by weight of a thermoplastic resin composition which, when solely fabricated into a test piece, exhibits a deflection temperature under load of at least 80 °C.

6. The polyolefinic resin composition as recited in any one of claims 1 - 5, **characterized in that** at least one type of said inorganic-based filler is calcium carbonate treated at its surface with fatty acid and that said calcium carbonate is incorporated in the resin composition in the amount of 0.5 - 20 % by weight.

7. The polyolefinic resin composition as recited in claim 6, **characterized in that** said calcium carbonate is heavy calcium carbonate.

8. The polyolefinic resin composition as recited in any one of claims 1 - 5, **characterized in that** at least one type of said inorganic-based filler is talc and that said talc is incorporated in the resin composition in the amount of 10 - 85 % by weight.

9. A method for preparation of a polyolefinic resin compound comprising a resin composition comprised primarily of a mixture of a polyolefinic resin and an inorganic-based filler having a mean particle diameter of not exceeding 10 µm and incorporated in the mixture in the amount of 0.5 - 85 % by weight, **characterized in that** said resin composition is extruded through a screen having a mesh size of at least 70.

10. A product fabricated from the polyolefinic resin composition as recited in any one of claims 1 - 8.

11. A polyolefinic resin product comprising a resin composition comprised primarily of a mixture containing a polyolefinic resin and an inorganic-based filler having a mean particle diameter of not exceeding 10 µm, said inorganic-based filler being incorporated in the resin composition in the amount of 0.5 - 85 % by weight.

12. The polyolefinic resin product as recited in claim 10 or 11, wherein said resin product exhibits a decrease in flexural modulus of 250 - 500 kgf/cm² at a surrounding temperature of 23 - 40 °C for a rise of temperature of 1 °C.

13. The polyolefinic resin product as recited in any one of claims 10 - 12, wherein the product contains voids which have a mean maximum diameter of 0.01 - 3 µm and occupy 0.1 - 10 % of the total volume.

14. The polyolefinic resin product as recited in claim 13, wherein at least 10 % of a surrounding region within a radial distance from the void that is 1.2 times as large as its maximum diameter is formed from a composition which exhibits a tensile elongation at break of at least 50 %.

15. The polyolefinic resin product as recited in any one of claims 11 - 14 containing 0.5 - 20 % by weight of a composition which exhibits a deflection temperature under load of at least 80 °C.

16. The polyolefinic resin product as recited in any one of claims 10 - 15, wherein said product is an extruded product.

17. The polyolefinic resin product as recited in any one of claims 10 - 16, wherein said product is constructed in the form of an automotive weatherstrip or a slide guide for an automotive side window glass.

18. A weatherstrip including:
a weatherstrip main body made from an polyolefinic resin composition comprised primarily of a mixture which contains a polyolefinic resin and an inorganic-based filler having a mean particle diameter up to 10 µm and incorporated in the resin composition in the amount by weight of 0.5 - 85 %; and
a covering member provided to cover a surface of said weatherstrip main body and made from an ethylene-propylene-nonconjugated diene terpolymer or a styrene-isoprene block copolymer.

19. A method for fabricating the weatherstrip as recited in claim 18, **characterized in that** said covering member is brought to cover the weatherstrip main body by a coextrusion technique.

20. A slide guide for an automotive side window glass including:
a slide guide maid body made from an polyolefinic resin composition comprised primarily of a mixture which contains a polyofinic resin and an inorganic-based filler having a mean particle diameter up to 10 µm and incorporated in the resin composition in the amount by weight of 0.5 - 85 %; and
a covering member provided to cover a surface of said slide guide main body and made from an ethylene-propylene-nonconjugated diene terpolymer or a styrene-isoprene block copolymer.

21. A method for fabricating the side glass slide guide as recited in claim 18, **characterized in that** said covering member is brought to cover the slide guide main body by a coextrusion technique.
